# EUROPEAN PATENT SPECIFICATION

(11) **EP 3 471 386 B1**
(45) Date of publication and mention of the grant of the patent: **14.10.2020**
(21) Application number: 18208923.5
(22) Date of filing: 18.11.2013
(51) Int. Cl.: H04M 1/725, H04L 29/08, H04W 4/21, H04W 4/80

(54) **ELECTRONIC DEVICE AND METHOD FOR DISPLAYING SERVICE INFORMATION IN ELECTRONIC DEVICE**
ELEKTRONISCHE VORRICHTUNG UND VERFAHREN ZUR ANZEIGE VON SERVICEINFORMATIONEN IN EINER ELEKTRONISCHEN VORRICHTUNG
DISPOSITIF ÉLECTRONIQUE ET PROCÉDÉ D'AFFICHAGE D'INFORMATIONS DE SERVICE DANS UN DISPOSITIF ÉLECTRONIQUE

(30) Priority: 16.11.2012 KR 20120130503; 30.10.2013 KR 20130130381; 15.11.2013 EP 13193182
(43) Date of publication of application: 17.04.2019
(62) Divisional of application: 13193285.7
(73) Proprietor: Samsung Electronics Co., Ltd., Gyeonggi-do 16677 (KR)
(72) Inventor: JUNG, Ji-Hyun, 16677 Suwon-si, (KR); JUNG, Bu-Seop, 16677 Suwon-si, (KR); BASTIN, Edwin Joseph Vimal, 16677 Suwon-si, (KR); LEE, Seung-Min, 16677 Suwon-si, (KR)
(74) Representative: HGF

(56) References cited:
- US-A1- 2009 214 036
- US-A1- 2012 038 781

## Description

### BACKGROUND OF THE INVENTION

### Field of the Invention

The present disclosure relates to an apparatus and method for displaying service information in an electronic device. More particularly, the present disclosure relates to an electronic device and a method for displaying service information provided from a service provider providing an external device that is connected to the electronic device by short-range communication.

### Description of the Related Art

Due to the popularization of electronic devices and the rapid spread of wireless Local Area Networks (LANs) with potential as open wireless networks, Wi-Fi communication networks have been used to provide high-speed data services.
If an electronic device is connected to an Access Point (AP) over a Wi-Fi communication network, the electronic device may display physical Wi-Fi characteristics (e.g., signal strength, link speed, security and Internet Protocol (IP) address, etc.) provided from the connected AP, using its User Interface (UI). In other words, a provider (e.g., an operator, a venue, etc.) providing the AP may provide a Service Set Identifier (SSID) of the AP. However, the provider may not provide other service information that the provider desires to provide to the users. For example, the provider may not provide various information such as advertisements or other additional information.
Accordingly, there is a need for an improved apparatus and method for displaying service information provided from a service provider that is connected to the electronic device by short-range communication.
US 2009/214036 A1 relates to security mechanisms for wireless networks that transmit content such as advertisements.
The above information is presented as background information only to assist with an understanding of the present disclosure. No determination has been made, and no assertion is made, as to whether any of the above might be applicable as prior art with regard to the present disclosure.

### SUMMARY OF THE INVENTION

Certain embodiments of the present invention aim to address at least the above-mentioned problems and/or disadvantages and to provide at least the advantages described below. Accordingly, an aim of certain embodiments of the present invention is to provide an electronic device and a method for displaying service information provided from a service provider providing an external device that is connected to the electronic device by short-range communication. It is an aim of certain embodiments of the invention to solve, mitigate or obviate, at least partly, at least one of the problems and/or disadvantages associated with the prior art. Certain embodiments aim to provide at least one of the advantages described below.
Another aim of certain embodiments of the present invention is to provide an electronic device and a method for providing a user with a variety of service information provided from an operator or a venue providing a Wi-Fi communication network. The invention is set out in the appended claims. Other aspects, advantages, and salient features of certain aspects and embodiments of the invention will become apparent to those skilled in the art from the following detailed description, which, taken in conjunction with the annexed drawings, discloses various embodiments of the present invention.

### BRIEF DESCRIPTION OF THE DRAWINGS

The above and other aspects, features, and advantages of certain embodiments of the present invention will be more apparent from the following description taken in conjunction with the accompanying drawings, in which:
FIG. 1 illustrates a system in which an electronic device receives service information provided from an information server of an external device or an Access Point (AP) according to various embodiments of the present disclosure;
FIGS. 2A and 2B illustrate a Venue information format, in which service information can be added, in an information message according to various embodiments of the present disclosure;
FIGS. 3A and 3B illustrate an Operator information format, in which service information can be added, in an information message according to various embodiments of the present disclosure;
FIG. 4 illustrates an additional service information format, in which service information is stored, in a reserved field of an information message according to various embodiments of the present disclosure;
FIG. 5 illustrates a structure of an electronic device according to various embodiments of the present disclosure;
FIG. 6 is a flowchart illustrating an operation of receiving service information provided by a service provider providing an external device in an electronic device according to various embodiments of the present disclosure;
FIGS. 7A, 7B, and 7C are flowcharts illustrating an operation of displaying service information provided by a service provider providing an external device in an electronic device according to various embodiments of the present disclosure;
FIGS. 8A and 8B illustrate an operation of providing image data as service information in an electronic device according to various embodiments of the present disclosure;
FIGS. 9A, 9B, and 9C illustrate an operation of providing character strings as service information in an electronic device according to various embodiments of the present disclosure;
FIGS. 10A and 10B illustrate an operation of providing Uniform Resource Locator (URL) addresses as service information in an electronic device according to various embodiments of the present disclosure;
FIGS. 11A and 11B illustrate an operation of providing download addresses as service information in an electronic device according to various embodiments of the present disclosure; and
FIG. 12 illustrates an operation of providing phone numbers as service information in an electronic device according to various embodiments of the present disclosure.
Throughout the drawings, like reference numerals will be understood to refer to like parts, components, and structures.

### DETAILED DESCRIPTION OF THE EXEMPLARY EMBODIMENTS

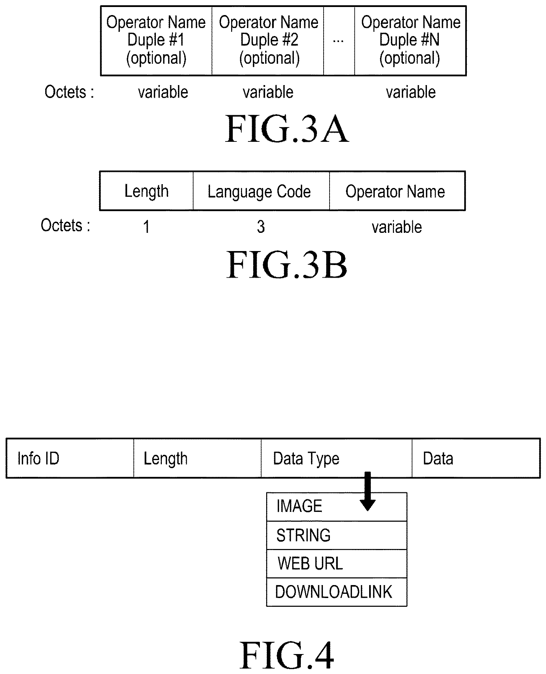

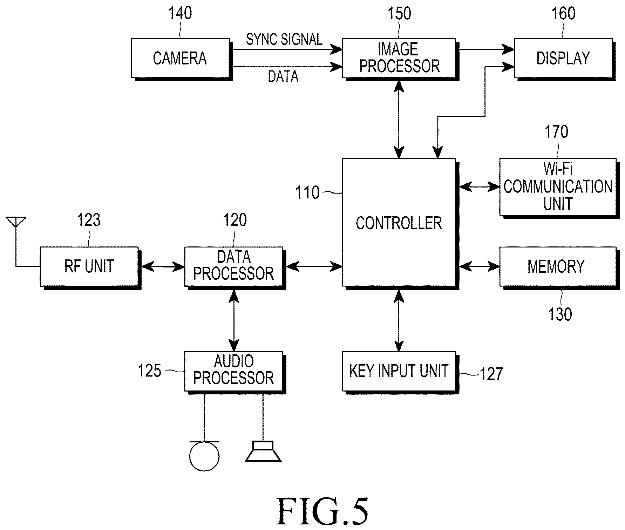

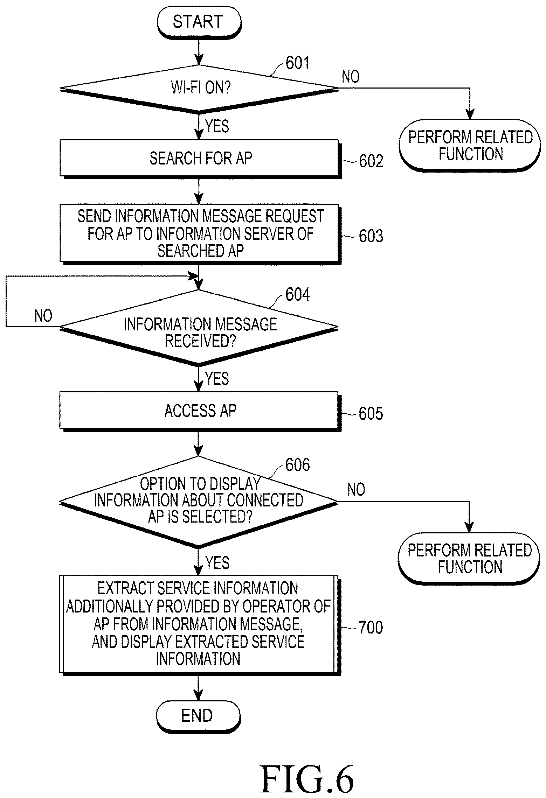

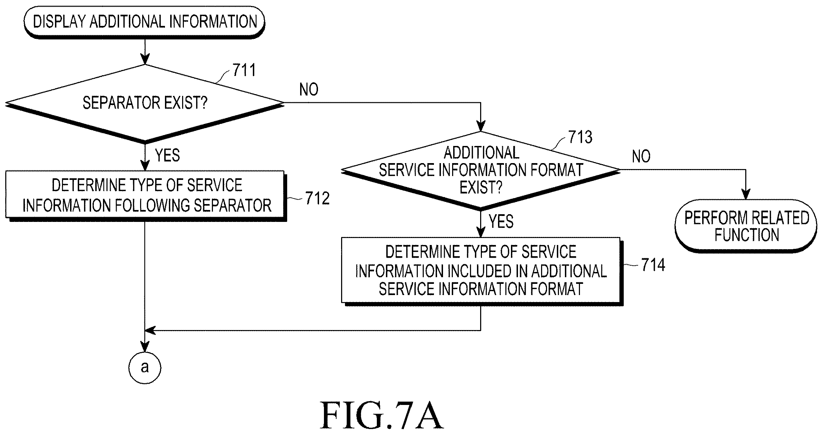

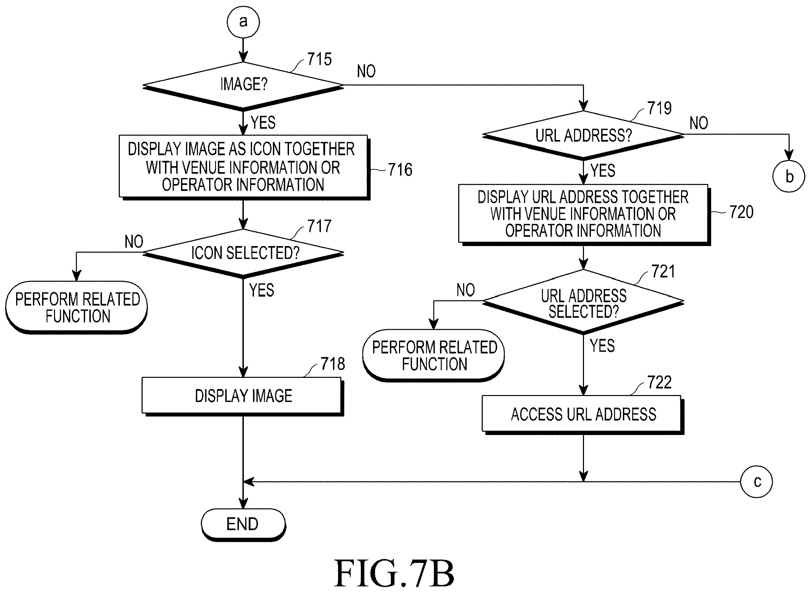

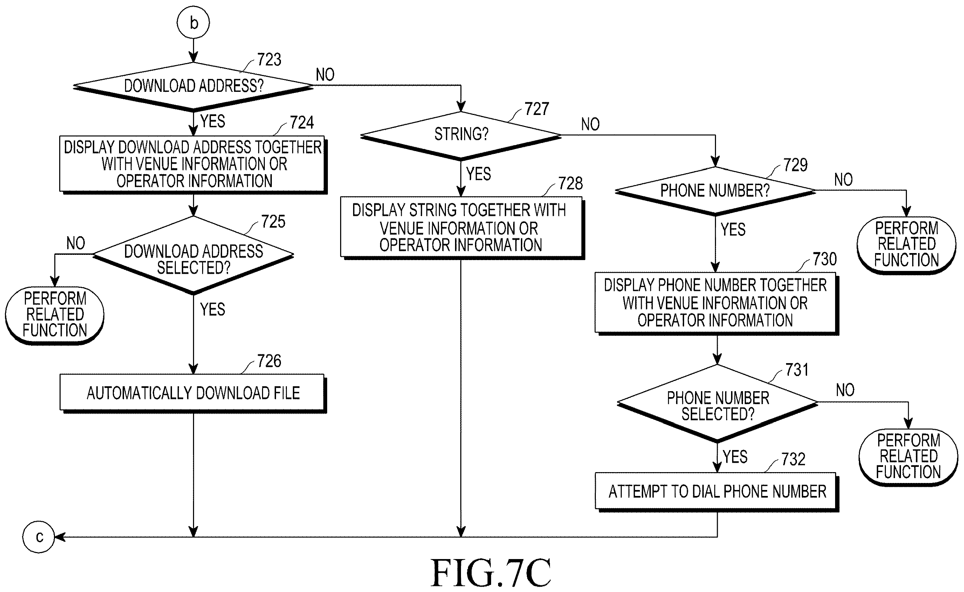

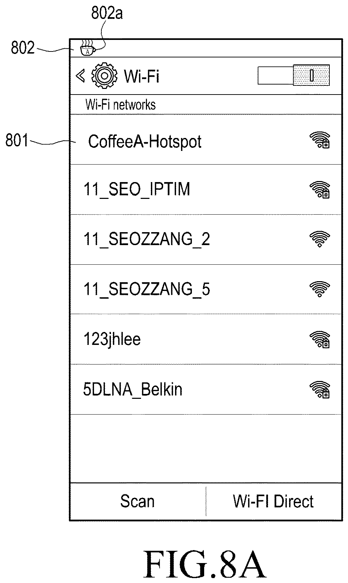

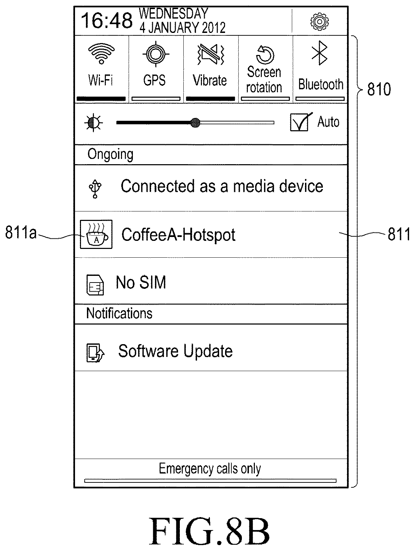

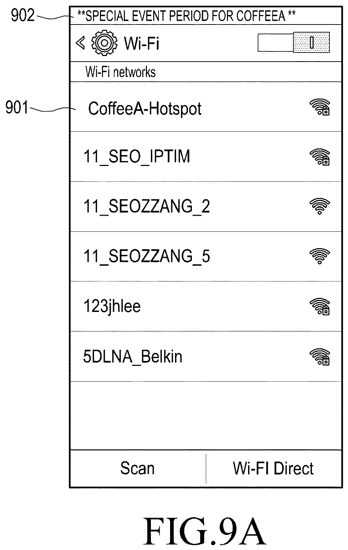

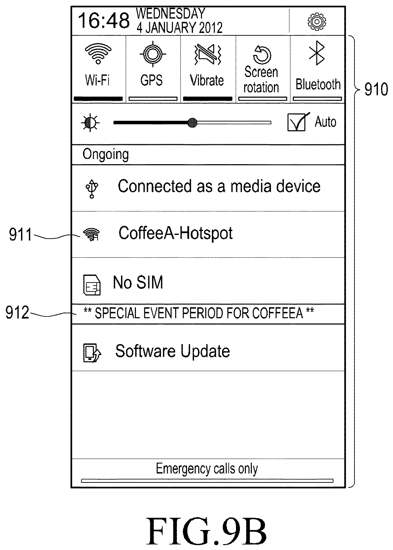

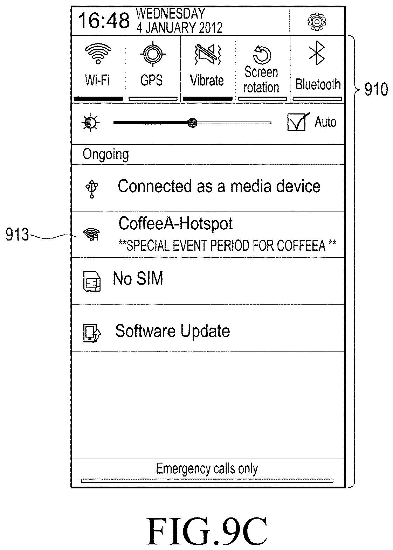

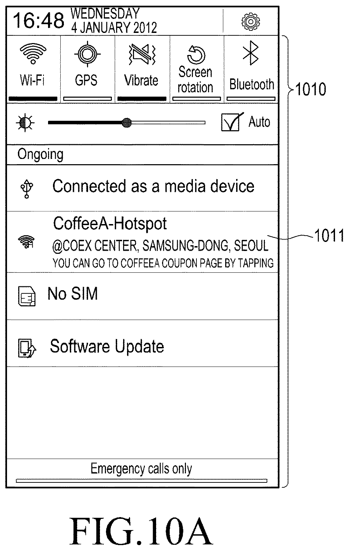

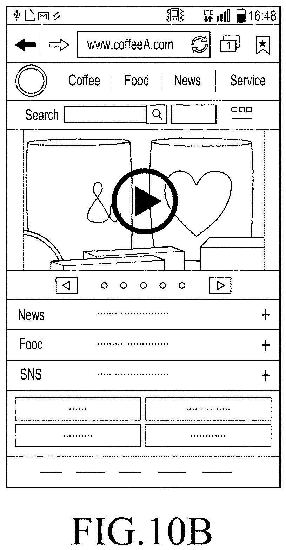

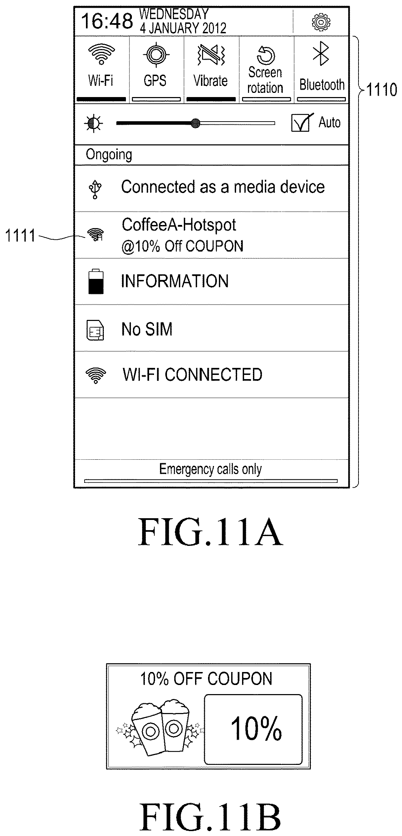

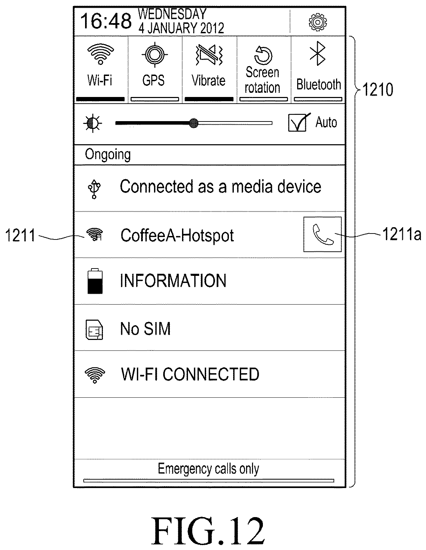

The following description with reference to the accompanying drawings is provided to assist in a comprehensive understanding of various embodiments of the present disclosure as defined by the claims. It includes various specific details to assist in that understanding but these are to be regarded as merely exemplary. In addition, descriptions of well-known functions and constructions may be omitted for clarity and conciseness.
The terms and words used in the following description and claims are not limited to the bibliographical meanings, but, are merely used by the inventor to enable a clear and consistent understanding of the present disclosure.
It is to be understood that the singular forms "a," "an," and "the" include plural referents unless the context clearly dictates otherwise. Thus, for example, reference to "a component surface" includes reference to one or more of such surfaces.
By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.
An electronic device according to various embodiments of the present disclosure may be embodied as a device with communication capabilities. For example, the electronic device may be one or a combination of two or more of various devices such as a smart phone, a tablet Personal Computer (PC), a mobile phone, a video phone, an e-Book reader, a desktop PC, a laptop PC, a Netbook computer, a Personal Digital Assistant (PDA), a Portable Multimedia Player (PMP), an MP3 player, mobile medical equipment, an electronic bracelet, an electronic necklace, an electronic Appcessory, a camera, a wearable device, an electronic clock, a wrist watch, a home appliance (e.g., a refrigerator, an air conditioner, a cleaner, an oven, a microwave, a washer, an air purifier, and the like), an Artificial Intelligence (AI) robot, a Television (TV), a Digital Versatile Disk (DVD) player, audio equipment, various medical devices (e.g., Magnetic Resonance Angiography (MRA), Magnetic Resonance Imaging (MRI), Computed Tomography (CT), a medical camcorder, ultrasonic equipment, and the like), a navigation device, a Global Positioning System (GPS) receiver, an Event Data Recorder (EDR), a Flight Data Recorder (FDR), a set-top box, a TV box (e.g., Samsung HomeSync™, Apple TV™, Google TV™, or the like), an electronic dictionary, an automotive infotainment device, electronic equipment for a ship (e.g., a marine navigation device, a gyro compass, and the like), avionics, security equipment, electronic apparel, an electronic key, a camcorder, game consoles, a Head-Mounted Display (HMD), a flat panel display device, an electronic picture frame, furniture or a part of building/structure with communication capabilities, an electronic board, an electronic signature receiving device, a projector, and the like. It will be apparent to those of ordinary skill in the art that the electronic device according to various embodiments of the present disclosure is not limited to the aforementioned devices. Short-range communication refers to a Wi-Fi communication network in the mobile communication network, and includes a Wi-Fi communication network capable of supporting Hotspot 2.0 in which network switching may be performed seamlessly. An external device, to which the electronic device is connected over the Wi-Fi communication network, is an Access Point (AP), and Z includes an AP for hotspots. For convenience, a provider of a venue where an AP is installed, and an operator providing an AP-based Wi-Fi communication network will be referred to as a 'service provider'.

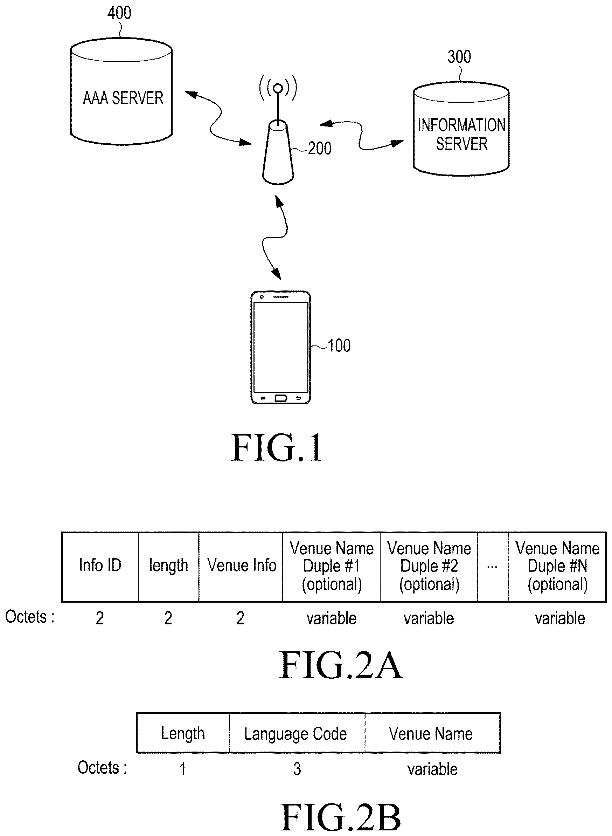

FIG. 1 illustrates a system in which an electronic device receives service information provided from an information server of an external device or an AP according to various embodiments of the present disclosure.
Referring to FIG. 1, if an AP 200 is discovered or found over the Wi-Fi communication network, and determined as a hotspot AP, an electronic device 100 may request an information message for the AP 200 from an information server 300 connected to the AP 200, via the AP 200.
Upon receiving an information message from the information server 300 via the AP 200, the electronic device 100 may perform an authentication process with an Authentication, Authorization and Accounting (AAA) server 400 using an authentication method specified in the information message, and automatically access (or connect with) the AP 200.
If an option to display information about the connected AP 200 is selected, the electronic device 100 connected to the AP 200 may extract service information provided by a service provider from the information message, and display the extracted service information. A structure of the electronic device 100 will be described below with reference to FIG. 5.
The information server 300 may store operator information, venue information, uplink/downlink information, external network (e.g., 3^{rd} Generation (3G) or Long Term Evolution (LTE)) information, access method information, authentication method information, and the like, of the AP 200.
Therefore, upon receiving the request for an information message from the electronic device 100 via the AP 200, the information server 300 may send an information message including the above information to the electronic device 100 via the AP 200.
In various embodiments of the present disclosure, the service information provided by the service provider may be added in a Venue information format and an Operator information format in the information message. In addition, the service information provided by the operator of the AP may be added in a reserved field of the information message.
FIGS. 2A and 2B illustrate a Venue information format, in which service information can be added, in an information message according to various embodiments of the present disclosure.
Referring to FIGS. 2A and 2B, a Venue information format and a format of a Venue Name Duple field in the Venue information format are respectively illustrated. The Venue information format is specified in the Institute of Electrical and Electronics Engineers (IEEE) 802.11 U standard, so its description will be omitted.
The venue information, which is actual data, may be stored in a Venue Name field of the Venue Name Duple field in FIG. 2B. Therefore, the service information provided by the service provider may be added in the Venue Name field, together with the venue information or actual data.
In the Venue Name field may be stored "actual data + separator + service information". If the service information is image metadata, "image://actual image data" may be stored, and if the service information is a web Uniform Resource Locator (URL) address, "http://web site url" may be stored. If the service information is a string, "string://additional string" may be stored, and if the service information is download link, "download://address of file to be downloaded" may be stored. If the service information is a phone number, "phone ://phone number" may be stored.
For example, if the venue information (or venue name) is "CoffeeA, COEX Center, Samsung-Dong, Seoul", and the service information to be added is "http://www.coffeeA.com", then "CoffeeA, COEX Center, Samsung-Dong, Seoul$$$http://www.coffeeA.com" may be stored in the Venue Name field. "$$$" is a separator indicating the storage (or presence) of service information, and various other characters may be used as the separator.
In various embodiments of the present disclosure, the information server 300 may be an Access Network Query Protocol (ANQP) server. Therefore, the electronic device 100 may request an information message as an ANQP query from the information server 300, and receive an information message from the information server 300 as a response to the query request.
FIGS. 3A and 3B illustrate an Operator information format, in which service information can be added, in an information message according to various embodiments of the present disclosure.
Referring to FIGS. 3A and 3B, an Operator Name element payload format (or Operator information format) and a format of an Operator Name Duple field in the Operator Name element payload format are respectively illustrated. The Operator Name element payload format is specified in the IEEE 802.11 U standard, so its description will be omitted.
The service provider information, which is actual data, may be stored in an Operator Name field in the format of the Operator Name Duple field in FIG. 3B. Therefore, in the Operator Name field may be added the service information provided by the service provider, together with the service provider information, which is actual data.
"Actual data + separator + service information" may be stored in the Operator N ame field, like in the Venue Name field. Therefore, if the service information is i mage metadata, "image://actual image data" may be stored, and if the service inf ormation is a web URL address, "http://web site url" may be stored. If the servic e information is a string, "string://additional string" may be stored, and if the ser vice information is a download link, "download://address of file to be downloade d" may be stored. If the service information is a phone number, "phone ://phone n umber" may be stored.
By adding service information to venue information, which is actual data, in the Venue Name field in FIGS. 2A and 2B, and adding service information provided by the service provider to the service provider information, which is actual data, in the Operator Name field in FIGS. 3A and 3B, the service provider may provide the advertisements and other information that the service provider desires to additionally provide to users.
FIG. 4 illustrates an additional service information format, in which service information is stored, in a reserved field of an information message according to various embodiments of the present disclosure.
Referring to FIG. 4, in an "Info ID" field may be stored a specific value indicating additional service information for a venue name or additional service information for an operator name, and in a "Length" field may be stored a length value of a new format. Further, in a "Data type" field may be stored the type (e.g., image, web URL, string, download link, phone number, or the like) of the service information stored in a "Data" field, and in the "Data" field may be stored the actual service information.
If "Image" is stored in the "Data type" field, "image://actual image data" may be stored in the "Data" field, and if "Web URL" is stored in the "Data type" field, "http://web site url" may be stored in the "Data" field. If "String" is stored in the "Data type" field, "string://additional string" may be stored in the "Data" field, and if "Download link" is stored in the "Data type" field, "download://address of file to be downloaded" may be stored in the "Data" field. If "Phone number" is stored in the "Data type" field, "phone://phone number" may be stored in the "Data" field.
By providing an additional service information format, in which service information provided by the service provider is stored, to a reserved field of the information message as illustrated in FIG. 4, the service provider may provide the advertisements and other information that the service provider desires to additionally provide to users.
FIG. 5 illustrates a structure of an electronic device according to various embodiments of the present disclosure.
Referring to FIG. 5, a Radio Frequency (RF) unit 123 is responsible for wireless communication of the electronic device. The RF unit 123 may include an RF transmitter for up-converting a frequency of transmission signals and amplifying the up-converted transmission signals, and an RF receiver for low-noise-amplifying received signals and down-converting a frequency of the low-noise-amplified received signals. A data processor 120 may include a transmitter for coding and modulating the transmission signals, and a receiver for demodulating and decoding the received signals. Thus, the data processor 120 may include a modulator/demodulator (modem) and a coder/decoder (codec). The codec may include a data codec for processing packet data and the like, and an audio codec for processing audio signals such as voice. An audio processor 125 may play received audio signals output from the audio codec in the data processor 120, using a speaker, or transfer transmission audio signals picked up by a microphone to the audio codec in the data processor 120.
A key input unit 127 may include numeric/character keys for entering numeric/character information, and function keys for setting various functions.
A memory 130 may include a program memory and a data memory. The program memory may store programs for controlling the overall operation of the electronic device, and control programs for, if the electronic device is connected to an AP, extracting service information additionally provided by the service provider from an information message used for connection to the AP, and displaying the extracted service information, according to various embodiments of the present disclosure. The data memory may temporarily store the data generated during execution of the programs.
The memory 130 may store the service information that is selected by the user while the electronic device displays the service information additionally provided by the service provider after the electronic device is connected to the AP.
A controller 110 may control operations of the electronic device.
In accordance with various embodiments of the present disclosure, if Wi-Fi communication is selected by the user on the electronic device, the controller 110 may search for (or scan) nearby APs by means of a Wi-Fi communication unit 170. If the searched AP is a hotspot AP having an information server, the controller 110 may request an information message for the AP from an information server connected to the AP, via the AP. Upon receiving an information message for the AP from the information server, the controller 110 may perform an authentication process with an AAA server (or authentication server) using an authentication method or an access method specified in the information message, and then access the AP.
If an option to display information about the external device is selected by the user after accessing the AP, the controller 110 may determine whether there is a separator in the Venue Name field of the Venus Name information format in FIGS. 2A and 2B and/or the Operator Name field of the Operator information format in FIGS. 3A and 3B, which are included in the information message.
If there is a separator in the Venue Name field and/or the Operator Name field, the controller 110 may extract information following the separator as service information that the service provider additionally provides, and display the extracted information. Otherwise, the controller 110 may extract service information additionally provided by the service provider from the new additional service information format in FIG. 4, which is included in the reserved field of the information message, and display the extracted service information.
If a panel providing a plurality of menus (e.g. a quick panel) is selected and a Wi-Fi menu among the menus provided on the panel is selected and turned on, the controller 110 may access the AP. After accessing the AP, the controller 110 may display the service information additionally provided by the service provider, in a specific area (e.g., a lower area) of the quick panel. The quick panel may be displayed on a display 160 as the user takes a top-to-bottom drag action. The quick panel may have multiple menus used to quickly turn on/off various functions such as Wi-Fi, Bluetooth, GPS, Sound, Auto-Rotate and the like. Thus, in this specification, a quick panel may be a panel providing a plurality of menus, each adapted to enable a user to provide an input (e.g. a single input) to turn on or off a respective function of the electronic device.
If the service information extracted from the information message is image data, the controller 110 may display the image data as an icon, together with the venue information (e.g., the venue name) or the operator information (e.g., the operator name), and if the icon is selected, the controller 110 may display the image data corresponding to the icon.
If the service information extracted from the information message is a URL address, the controller 110 may display the URL address, together with the venue information or the operator information, and if the URL address is selected, the controller 110 may access the URL address.
If the service information extracted from the information message is an address of a file to be downloaded, the controller 110 may display the address of a file to be downloaded, together with the venue information or the operator information, and if the address of a file to be downloaded is selected, the controller 110 may access the address of a file to be downloaded, and automatically download the file.
If the service information extracted from the information message is a character string, the controller 110 may display the character string, together with the venue information or the operator information.
If the service information extracted from the information message is a phone number, the controller 110 may display the phone number, together with the venue information or the operator information.
A camera 140 may include a camera sensor for capturing image data and converting the captured optical image signal into electrical image signal, and a signal processor for converting an analog image signal captured by the camera sensor into digital image data. The camera sensor may be a Charge-Coupled Device (CCD) or Complementary Metal Oxide Semiconductor (CMOS) sensor, and the signal processor may be implemented with a Digital Signal Processor (DSP). The camera sensor and the signal processor may be implemented integrally or separately.
An image processor 150 may perform Image Signal Processing (ISP) to display image signals output from the camera 140 on the display 160. The ISP may include gamma correction, interpolation, spatial variation, image effects, image scaling, Automatic White Balance (AWB), Automatic Exposure (AE), Automatic Focus (AF), and the like. The image processor 150 may process the image signals output from the camera 140 on a frame by frame basis, and may output the frame image data according to the characteristics and size of the display unit 160. The image processor 150, which includes a video codec, may compress frame image data displayed on the display 160, or decompress the compressed frame image data into its original frame image data using a preset coding scheme. The video codec may include a Joint Photographic Expert Group (JPEG) codec, a Moving Picture Expert Group 4 (MPEG4) codec, a Wavelet codec, or the like. The image processor 150 is assumed to have an On Screen Display (OSD) function, and may output OSD data depending on the size of the displayed screen, under control of the controller 110.
The display 160 may display, on its screen, image signals output from the image processor 150 and user data output from the controller 110. The display 160 may use a Liquid Crystal Display (LCD) as its display panel. In this case, the display 160 may include an LCD controller, a video memory for storing image data, and an LCD display panel. If implemented as a touch screen, the LCD panel may operate as an input unit. In this case, the same keys as those on the key input unit 127 may be displayed on the display 160.
If the display unit 160 is used as a touch screen unit as it is implemented as a touch screen, the touch screen unit may be comprised of a Touch Screen Panel (TSP) including a plurality of sensor panels. The sensor panels may include a capacitive sensor panel capable of sensing a coarse touch by fingertips, and an electromagnetic induction sensor panel capable of sensing a fine touch such as a touch by a stylus pen.
In accordance with various embodiments of the present disclosure, if the electronic device is connected to the AP through the Wi-Fi communication unit 170, the display 160 may display on the quick panel the additional service information provided by the operator of the AP, together with the venue information or the operator information.
An operation of displaying service information in the electronic device will be further described with reference to FIGS. 6 to 12.
FIG. 6 is a flowchart illustrating an operation of receiving service information provided by a service provider providing an external device in an electronic device according to various embodiments of the present disclosure.
The operation of receiving service information will be described with reference to FIG. 6.
Referring to FIG. 6, if it is determined in operation 601 that an option to turn on Wi-Fi is selected, a controller may search for (or scan) nearby APs in operation 602.
If a specific AP is searched or found through the operation 602 of searching for nearby APs, and the AP is determined as a hotspot AP based on the information received from the searched AP, the controller may send a request for information message for the AP to an information server connected to the AP, via the AP in operation 603.
If it is determined in operation 604 that the information message is received from the information server, the controller may perform authentication with an AAA server using an access method or an authentication method specified in the information message and automatically access (or connect with) the AP, in operation 605.
After accessing the AP, if it is determined in operation 606 that an option to display information about the external device is selected (e.g., the quick panel is selected) by the user, the controller may extract service information (or additional information) provided by the service provider of the AP from the information message received in operation 604, and display the extracted service information, in operation 700.
The operation 700 of extracting and displaying service information will be described with reference to FIGS. 7A to 7C.
FIGS. 7A, 7B, and 7C are flowcharts illustrating an operation of displaying service information provided by a service provider providing an external device in an electronic device according to various embodiments of the present disclosure.
Referring to FIGS. 7A to 7C, the controller may determine in operation 711 whether there is a separator indicating that service information is stored in the Venue Name field of the Venue information format in FIGS. 2A and 2B or the Operator Name field of the Operator information format in FIGS. 3A and 3B, in the information message.
If a separator (e.g., $$$) is present in the Venue Name field or the Operator Name field, the controller may determine the type of the service information following the separator in operation 712.
In contrast, if it is determined in operation 711 that there is no separator in the Venue Name field or the Operator Name field, the controller may determine in operation 713 whether an additional service information format, in which service information is stored as shown in FIG. 4, exists in a reserved field of the information message.
If the additional service information format exists in the reserved field, the controller may determine the type of the service information stored in the "Data" field based on the information stored in the "Data type" field of the additional service information format, in operation 714.
After determining the type of the service information in operation 712 or 714, if the type of the service information is determined as image data in operation 715, the controller may display, in operation 716, the image data as a corresponding icon, together with venue information (e.g., the name of the venue where the AP is installed) or operator information (e.g., the name of the operator providing the AP-based Wi-Fi communication network), which are stored in the Venue Name field and the Operator Name field as actual data, respectively. If the icon is selected in operation 717, the controller may display the image corresponding to the icon in operation 718.
After determining the type of the service information, if the type of the service information is determined as a web URL address in operation 719, the controller may display, in operation 720, the URL address, together with venue information (e.g., the name of the venue where the AP is installed) or operator information (e.g., the name of the operator providing the AP-based Wi-Fi communication network), which are stored in the Venue Name field and the Operator Name field as actual data, respectively.
If the URL address is selected in operation 721, the controller may access the URL address in operation 722.
After determining the type of the service information, if the type of the service information is determined as an address of a file to be downloaded in operation 723, the controller may display, in operation 724, the address of a file to be downloaded, together with venue information (e.g., the name of the venue where the AP is installed) or operator information (e.g., the name of the operator providing the AP-based Wi-Fi communication network), which are stored in the Venue Name field and the Operator Name field as actual data, respectively.
If the address of a file to be downloaded is selected in operation 725, the controller may access the address of a file to be downloaded, and automatically download the file, in operation 726.
After determining the type of the service information, if the type of the service information is determined as a string in operation 727, the controller may display, in operation 728, the string, together with venue information (e.g., the name of the venue where the AP is installed) or operator information (e.g., the name of the operator providing the AP-based Wi-Fi communication network), which are stored in the Venue Name field and the Operator Name field as actual data, respectively.
After determining the type of the service information, if the type of the service information is determined as a phone number in operation 729, the controller may display, in operation 730, the phone number, together with venue information (e.g., the name of the venue where the AP is installed) or operator information (e.g., the name of the operator providing the AP-based Wi-Fi communication network), which are stored in the Venue Name field and the Operator Name field as actual data, respectively. If the phone number is selected in operation 731, the controller may attempt to dial the phone number in operation 732, and may store the phone number in a memory.
Examples of the operation of displaying service information in FIGS. 7A to 7C will be described with reference to FIGS. 8A to 12. Although it will be assumed in FIGS. 8A to 12 that one type of service information is displayed, the number of types of displayed service information is subject to change. In addition, although it will be assumed in FIGS. 8A to 12 that the service information (stored in the Venue Name field) additionally provided by the provider of the venue, at which the AP is installed, is displayed, the service information (stored in the Operator Name field) additionally provided by the operator providing the AP-based Wi-Fi communication network, may also be displayed together. FIGS. 8A and 8B illustrate an operation of providing image data as service information in an electronic device according to various embodiments of the present disclosure.
Referring to FIGS. 8A and 8B, upon receiving, from a hotspot AP installed in a CoffeeA venue, an information message in which information "CoffeeA, COEX Center, Samsung-Dong, Seoul$$$image://coffeeA-coupon image11.jpg" is stored in the Venue Name field, the electronic device may access the hotspot AP installed in the CoffeeA venue. If the electronic device switches to the preference mode as illustrated in FIG. 8A as the preference menu is selected, the electronic device may extract a name "CoffeeA" of the venue where the AP is installed, and a coupon image "image://coffeeA-coupon image 11.jpg" which is the service information, from the Venue Name field of the Venue information format in the information message. The electronic device may display connection information "CoffeeA-Hotspot" 801 including the venue name extracted in the preference mode, to indicate that the electronic device is connected to the hotspot AP installed in the CoffeeA venue through a Wi-Fi communication unit. In the preference mode, an icon 802a corresponding to the coupon image provided as the service information "image://coffeeA-coupon image 11.jpg" may be displayed in an indication bar area 802 of a display. If the icon 802a is selected, the electronic device may display or store the coupon image corresponding to the icon 802a.
After accessing the hotspot AP installed in the CoffeeA venue, if a quick panel 810 is selected and displayed, the electronic device may display in an indication area 811 an icon 811a corresponding to the coupon image provided as the service information "image://coffeeA-coupon image11.jpg", together with the connection information "CoffeeA-Hotspot" including the venue name extracted from the Venue Name field, as illustrated in FIG. 8B. If the icon 811a is selected, the electronic device may display or store the coupon image corresponding to the icon 811a.
FIGS. 9A to 9C illustrate an operation of providing character strings as service information in an electronic device according to various embodiments of the present disclosure.
Referring to FIGS. 9A to 9C, upon receiving, from a hotspot AP installed in a CoffeeA venue, an information message in which information "CoffeeA, COEX Center, Samsung-Dong, Seoul$$$string:// **Special Event Period for CoffeeA**" is stored in the Venue Name field, the electronic device may access the hotspot AP installed in the CoffeeA venue. If the electronic device switches to the preference mode as illustrated in FIG. 9A as the preference menu is selected, the electronic device may extract a name "CoffeeA" of the venue where the AP is installed, and a character string "**Special Event Period for CoffeeA**" which is the service information, from the Venue Name field of the Venue information format in the information message. The electronic device may display connection information "CoffeeA-Hotspot" 901 including the venue name extracted in the preference mode, to indicate that the electronic device is connected to the hotspot AP installed in the CoffeeA venue through a Wi-Fi communication unit. In the preference mode, the character string "**Special Event Period for CoffeeA**" provided as the service information may be displayed, scrolling left or right in an indication bar area 902 of a display.
After accessing the hotspot AP installed in the CoffeeA venue, if a quick panel 910 is selected and displayed, the electronic device may display in an indication area 911 the connection information "CoffeeA-Hotspot" including the venue name extracted from the Venue Name field as illustrated in FIG. 9B. The character string "**Special Event Period for CoffeeA**" provided as the service information may be displayed, scrolling left or right on a notification bar 912 of the quick panel 910. As illustrated in FIG. 9C, the character string "**Special Event Period for CoffeeA**" provided as the service information may be displayed in an indication area 913, together with the connection information "CoffeeA- Hotspot".
FIGS. 10A and 10B illustrate an operation of providing URL addresses as service information in an electronic device according to various embodiments of the present disclosure.
Referring to FIGS. 10A and 10B, upon receiving, from a hotspot AP installed in a CoffeeA venue, an information message in which information "CoffeeA, COEX Center, Samsung-Dong, Seoul$$$http://www.coffeeA.com" is stored in the Venue Name field, the electronic device may access the hotspot AP installed in the CoffeeA venue. If a quick panel 1010 is selected, the electronic device may extract a name "CoffeeA" of the venue where the AP is installed, and a URL address "http://www.coffeeA.com" which is the service information, from the Venue Name field of the Venue information format in the information message. As illustrated in FIG. 10A, the URL address "http://www.coffeeA.com" which is the service information may be displayed in an indication area 1011 as a string "COEX Center, Samsung-Dong, Seoul" in the quick panel 1010, together with connection information "CoffeeA-Hotspot" including the venue name extracted from the Venue Name field. As the service information, the URL address "http://www.coffeeA.com" may be directly displayed, or may be displayed as a string "COEX Center, Samsung-Dong, Seoul" as illustrated in FIG. 10A. If the string "COEX Center, Samsung-Dong, Seoul" in the area 1011 of FIG. 10A is selected, the electronic device may directly access the URL address "http://www.coffeeA.com" as shown in FIG. 10B.
Alternatively, upon accessing the hotspot AP installed in the CoffeeA venue, the electronic device may immediately access the URL address "http://www.coffeeA.com".
FIGS. 11A and 11B illustrate an operation of providing download addresses as service information in an electronic device according to various embodiments of the present disclosure.
Referring to FIGS. 11A and 11B, upon receiving, from a hotspot AP installed in a CoffeeA venue, an information message in which information "CoffeeA, COEX Center, Samsung-Dong, Seoul$$$download://www.coffeeA.com/database/coupon/image 10.jpg" is stored in the Venue Name field, the electronic device may access the hotspot AP installed in the CoffeeA venue. If a quick panel 1110 is selected, the electronic device may extract a name "CoffeeA" of the venue where the AP is installed, and a download address "www.coffeeA.com/database/coupon/image10.jpg" which is the service information, from the Venue Name field of the Venue information format in the information message. As illustrated in FIG. 11A, the download address which is the service information may be displayed in an indication area 1111 as a string "10% Off Coupon" in the quick panel 1110, together with connection information "CoffeeA-Hotspot" including the venue name extracted from the Venue Name field. As the service information, the download address may be directly displayed, or may be displayed as a string "10% Off Coupon" as illustrated in FIG. 11A. If the string "10% Off Coupon" in the area 1111 of FIG. 11A is selected, the electronic device may access the download address "www.coffeeA.com/database/coupon/image10.jpg", download an image "10% Off Coupon" as illustrated in FIG. 11B, and display or store the downloaded image. If content such as video data or audio data is downloaded using the download address, the downloaded content may be directly played.
FIG. 12 illustrates an operation of providing phone numbers as service information in an electronic device according to various embodiments of the present disclosure.
Referring to FIG. 12, upon receiving, from a hotspot AP installed in a CoffeeA venue, an information message in which information "CoffeeA, COEX Center, Samsung-Dong, Seoul$$$phone://00-111-2222" is stored in the Venue Name field, the electronic device may access the hotspot AP installed in the CoffeeA venue. If a quick panel 1210 is selected, the electronic device may extract a name "CoffeeA" of the venue where the AP is installed, and a phone number "00-111-2222" which is the service information, from the Venue Name field of the Venue information format in the information message. As illustrated in FIG. 12, the phone number which is the service information may be displayed in an indication area 1211 as a Call icon 1211a in the quick panel 1210, together with connection information "CoffeeA-Hotspot" including the venue name extracted from the Venue Name field. If the Call icon 1211a in the area 1211 of FIG. 12 is selected, the electronic device may attempt to dial the phone number "00-111-2222" which is the service information. The phone number "00-111-2222" or the service information may be stored in a memory, together with the venue information.
In various embodiments of the present disclosure, the service information included in the information message may be automatically displayed, if the electronic device accesses the AP.
In addition, the controller of the electronic device may search for or scan nearby APs as an option to turn on Wi-Fi is selected, and before selecting and accessing a specific AP among the searched at least one AP, the controller may determine the presence/absence of service information in an information message for each of the at least one AP, which is received via each of the at least one AP, and display the presence/absence of the service information for each of the at least one AP. For example, the controller may determine the presence/absence of the service information depending on whether a separator is present in the Venue Name field or the Operator Name field of the information message that is received before the electronic device accesses the AP. If a specific icon indicating the presence of service information is selected while the electronic device displays the icon indicating the presence of the service information for the AP with service information among the at least one AP, the controller may display details about the service information (e.g., information following the separator in the Venue Name field or the Operator Name field).
The proposed apparatus and method for displaying service information may be implemented as computer-readable code in a computer-readable recording medium. The computer-readable recording medium may include any kind of recording device storing computer-readable data. Examples of the recording medium may include Read Only Memory (ROM), Random Access Memory (RAM), optical disk, magnetic tape, floppy disk, hard disk, non-volatile memory, and the like, and may also include the medium that is implemented in the form of carrier waves (e.g., transmission over the Internet). In addition, the computer-readable recording medium may be distributed over the computer systems connected over the network, and computer-readable codes may be stored and executed in a distributed manner.
As is apparent from the foregoing description, upon accessing the Wi-Fi communication network, the electronic device may receive a variety of service information from an operator or a venue providing the Wi-Fi communication network, making it possible for the operator to provide a variety of service information to the users, contributing to the improvement of the advertising efficiency.
Throughout the description and claims of this specification, the words "comprise" and "contain" and variations of the words, for example "comprising" and "comprises", means "including but not limited to", and is not intended to (and does not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.
Features, integers, characteristics, compounds, chemical moieties or groups described in conjunction with a particular aspect, embodiment or example of the invention are to be understood to be applicable to any other aspect, embodiment or example described herein unless incompatible therewith.
It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

## Claims

1. An electronic device (100) comprising:
a Wi-Fi communication unit (170); and
a controller (110) configured to:
identify an input for turning on Wi-Fi;
in response to the input for turning on Wi-Fi, search for nearby Access Points, APs, via the Wi-Fi communication unit (170);
if an AP (200) supporting Hotspot 2.0 is searched, request an information message for the AP from an information server (300) connected to the AP (200);
in response to the requesting of the information message, receive the information message from the information server (300);
display service information, if the service information related to the AP (200) is included in the information message; and
connect the electronic device (100) with the AP (200) using access information and authentication information included in the information message.

2. The electronic device (100) of claim 1, wherein, before connecting the electronic device (100) with the AP (200) among the nearby APs, the controller (110) is configured to identify whether the service information is included in the information message for the AP (200).

3. The electronic device (100) of claim 1, wherein, before connecting the electronic device (100) with the AP (200) among the searched at least one AP, the controller (110) is configured to identify whether service information is included in a respective information message for each of the nearby APs and to display information on whether the service information is included in the respective information message for each of the nearby APs.

4. The electronic device (100) of claim 1, wherein the service information related to the AP (200) is provided by a service provider of the AP (200) and the service provider is an operator providing the AP-based Wi-Fi communication network.

5. The electronic device (100) of claim 1, wherein the controller (110) is further configured to connect the electronic device (100) with the AP (200) via the Wi-Fi communication unit (170).

6. The electronic device (100) of claim 1, wherein the controller (110) is further configured to extract the service information from the information message and to display the extracted service information, if an option to display information about the AP (200) is selected after the electronic device (100) is connected to the AP (200) via the Wi-Fi communication unit (170).

7. The electronic device (100) of claim 1, wherein, if the service information comprises a Uniform Resource Locator, URL, address, the controller (110) is further configured to display the URL address, and to access the URL address if the URL address is selected.

8. A method for displaying service information in an electronic device (100), the method comprising:
identifying an input for turning on Wi-Fi;
in response to the input for turning on Wi-Fi, searching for nearby Access Points, APs;
if an AP (200) supporting Hotspot 2.0 is searched, requesting an information message for the AP (200) from an information server (300) connected to the AP (200);
receiving the information message from the information server (300);
displaying service information, if the service information related to the AP (200) is included in the information message; and
connecting the electronic device (100) with the AP (200) using access information and authentication information included in the information message.

9. The method of claim 8, further comprising:
before connecting the electronic device (100) with the AP (200) among the nearby APs, identifying whether the service information is included in the information message for the AP (200).

10. The method of claims 8 or claim 9, further comprising:
before connecting the electronic device (100) with the AP (200) among the searched at least one AP, identifying whether service information is included in a respective information message for each of the nearby APs; and
displaying information on whether the service information is included in the respective information message for each of the nearby APs.

11. The method of any one of claims 8 to 10, wherein the service information related to the AP (200) is provided by a service provider of the AP (200) and the service provider is an operator providing the AP-based Wi-Fi communication network.

12. The method of any one of claims 8 to 11, wherein the connecting comprises connecting the electronic device (100) with the AP (200) via a Wi-Fi communication unit (170).

13. The method of any one of claims 8 to 12, further comprising:
extracting the service information from the information message and displaying the extracted service information, if an option to display information about the AP (200) is selected after the electronic device (100) is connected to the AP (200) via the Wi-Fi communication unit (170).

14. The method of any one of claims 8 to 13, wherein the displaying comprises:
if the service information comprises a Uniform Resource Locator, URL, address, displaying the URL address; and
accessing the URL address if the URL address is selected.

## Patentansprüche

1. Elektronisches Gerät (100), umfassend: eine Wi-Fi-Kommunikationseinheit (170); und
eine Steuerung (110), die konfiguriert ist, um: eine Eingabe zum Einschalten von Wi-Fi zu erkennen;
als Reaktion auf die Eingabe zum Einschalten von Wi-Fi, über die Wi-Fi-Kommunikationseinheit (170) nach nahe gelegenen Access Points (APs) zu suchen;
wenn ein AP (200) gesucht wird, der Hotspot 2.0 unterstützt, eine Informationsnachricht für den AP von einem mit dem AP (200) verbundenen Informationsserver (300) anzufordern;
als Reaktion auf das Anfordern der Informationsnachricht die Informationsnachricht vom Informationsserver (300) zu empfangen;
Dienstinformationen anzuzeigen, wenn die Dienstinformationen, die sich auf den AP (200) beziehen, in der Informationsnachricht enthalten sind; und
das elektronische Gerät (100) mit dem AP (200) unter Verwendung von Zugangsinformationen und Authentifizierungsinformationen, die in der Informationsnachricht enthalten sind, zu verbinden.

2. Elektronisches Gerät (100) nach Anspruch 1, wobei vor dem Verbinden des elektronischen Geräts (100) mit dem AP (200) unter den nahe gelegenen APs die Steuerung (110) konfiguriert ist, um zu bestimmen, ob die Dienstinformationen in der Informationsnachricht für den AP (200) enthalten sind.

3. Elektronische Gerät (100) nach Anspruch 1, wobei vor dem Verbinden des elektronischen Geräts (100) mit dem AP (200) unter dem gesuchten mindestens einen AP die Steuerung (110) konfiguriert ist, um zu bestimmen, ob Dienstinformationen in einer jeweiligen Informationsnachricht für jeden der nahe gelegenen APs enthalten sind, und um Informationen darüber anzuzeigen, ob die Dienstinformationen in der jeweiligen Informationsnachricht für jeden der nahe gelegenen APs enthalten sind.

4. Elektronisches Gerät (100) nach Anspruch 1, wobei die Dienstinformationen, die sich auf den AP (200) beziehen, von einem Dienstanbieter des APs (200) bereitgestellt werden und der Dienstanbieter ein Betreiber ist, der das AP-basierte Wi-Fi-Kommunikationsnetz bereitstellt.

5. Elektronisches Gerät (100) nach Anspruch 1, wobei die Steuerung (110) ferner konfiguriert ist, um das elektronische Gerät (100) über die Wi-Fi-Kommunikationseinheit (170)

6. Elektronisches Gerät (100) nach Anspruch 1, wobei die Steuerung (110) ferner konfiguriert ist, um die Dienstinformationen aus der Informationsnachricht zu extrahieren und die extrahierten Dienstinformationen anzuzeigen, wenn eine Option zum Anzeigen von Informationen über den AP (200) ausgewählt ist, nachdem das elektronische Gerät (100) über die Wi-Fi-Kommunikationseinheit (170) mit dem AP (200) verbunden ist.

7. Elektronisches Gerät (100) nach Anspruch 1, wobei, wenn die Dienstinformationen eine Uniform Resource Locator (URL) -Adresse umfassen, die Steuerung (110) ferner konfiguriert ist, um die URL-Adresse anzuzeigen und auf die URL-Adresse zuzugreifen, wenn die URL-Adresse ausgewählt ist.

8. Verfahren zum Anzeigen von Dienstinformationen in einem elektronischen Gerät (100), wobei das Verfahren umfasst:
Erkennen einer Eingabe zum Einschalten von Wi-Fi;
als Reaktion auf die Eingabe zum Einschalten von Wi-Fi, Suchen nach nahe gelegenen Access Points (APs);
wenn ein AP (200) gesucht wird, der Hotspot 2.0 unterstützt, Anfordern einer Informationsnachricht für den AP (200) von einem mit dem AP (200) verbundenen Informationsserver (300);
Empfangen der Informationsnachricht vom Informationsserver (300);
Anzeigen von Dienstinformationen, wenn die Dienstinformationen, die sich auf den AP (200) beziehen, in der Informationsnachricht enthalten sind; und
Verbinden des elektronischen Geräts (100) mit dem AP (200) unter Verwendung von Zugangsinformationen und Authentifizierungsinformationen, die in der Informationsnachricht enthalten sind.

9. Verfahren nach Anspruch 8, ferner umfassend:
vor dem Verbinden des elektronischen Geräts (100) mit dem AP (200) unter den nahe gelegenen APs, Bestimmen, ob die Dienstinformationen in der Informationsnachricht für den AP (200) enthalten sind.

10. Verfahren nach Anspruch 8 oder Anspruch 9, ferner umfassend:
vor dem Verbinden des elektronischen Geräts (100) mit dem AP (200) unter dem gesuchten mindestens einen AP, Bestimmen, ob Dienstinformationen in einer jeweiligen Informationsnachricht für jeden der nahe gelegenen APs enthalten sind; und
Anzeigen von Informationen darüber, ob die Dienstinformationen in der jeweiligen Informationsnachricht für jeden der nahe gelegenen APs enthalten sind.

11. Verfahren nach einem der Ansprüche 8 bis 10, wobei die Dienstinformationen, die sich auf den AP (200) beziehen, von einem Dienstanbieter des AP (200) bereitgestellt werden und der Dienstanbieter ein Betreiber ist, der das AP-basierte Wi-Fi-Kommunikationsnetz bereitstellt.

12. Verfahren nach einem der Ansprüche 8 bis 11, wobei das Verbinden das Verbinden des elektronischen Geräts (100) über eine Wi-Fi-Kommunikationseinheit (170) mit dem AP (200) umfasst.

13. Verfahren nach einem der Ansprüche 8 bis 12, ferner umfassend: Extrahieren der Dienstinformationen aus der Informationsnachricht und Anzeigen der extrahierten Dienstinformationen, wenn eine Option zum Anzeigen von Informationen über den AP (200) ausgewählt ist, nachdem das elektronische Gerät (100) über die Wi-Fi-Kommunikationseinheit (170) mit dem AP (200) verbunden ist.

14. Verfahren nach einem der Ansprüche 8 bis 13, wobei das Anzeigen umfasst:
wenn die Serviceinformationen eine Uniform Resource Locator (URL) -Adresse umfassen, Anzeigen der URL-Adresse; und
Zugreifen auf die URL-Adresse, wenn die URL-Adresse ausgewählt ist.

## Revendications

1. Dispositif électronique (100) comprenant :
une unité de communication Wi-Fi (170) ; et
un contrôleur (110) configuré pour :
identifier une entrée destinée à activer le Wi-Fi ;
en réponse à l'entrée destinée à activer le Wi-Fi, rechercher des points d'accès, AP, à proximité via l'unité de communication Wi-Fi (170) ;
si un AP (200) prenant en charge Hotspot 2.0 est recherché, demander un message d'informations pour l'AP auprès d'un serveur d'informations (300) connecté à l'AP (200) ;
en réponse à la demande du message d'informations, recevoir le message d'informations du serveur d'informations (300) ;
afficher des informations de service, si les informations de service liées à l'AP (200) sont incluses dans le message d'informations ; et
connecter le dispositif électronique (100) à l'AP (200) en utilisant des informations d'accès et des informations d'authentification incluses dans le message d'informations.

2. Dispositif électronique (100) selon la revendication 1, dans lequel, avant de connecter le dispositif électronique (100) à l'AP (200) parmi les AP à proximité, le contrôleur (110) est configuré pour identifier si les informations de service sont incluses dans le message d'informations pour l'AP (200).

3. Dispositif électronique (100) selon la revendication 1, dans lequel, avant de connecter le dispositif électronique (100) à l'AP (200) parmi l'au moins un AP recherché, le contrôleur (110) est configuré pour identifier si des informations de service sont incluses dans un message d'informations respectif pour chacun des AP à proximité et pour afficher des informations indiquant si les informations de service sont incluses dans le message d'informations respectif pour chacun des AP à proximité.

4. Dispositif électronique (100) selon la revendication 1, dans lequel les informations de service liées à l'AP (200) sont fournies par un fournisseur de services de l'AP (200) et le fournisseur de services est un opérateur fournissant le réseau de communication Wi-Fi basé sur l'AP.

5. Dispositif électronique (100) selon la revendication 1, dans lequel le contrôleur (110) est en outre configuré pour connecter le dispositif électronique (100) à l'AP (200) via l'unité de communication Wi-Fi (170).

6. Dispositif électronique (100) selon la revendication 1, dans lequel le contrôleur (110) est en outre configuré pour extraire les informations de service du message d'informations et pour afficher les informations de service extraites, si une option destinée à afficher des informations sur l'AP (200) est sélectionnée après la connexion du dispositif électronique (100) à l'AP (200) via l'unité de communication Wi-Fi (170).

7. Dispositif électronique (100) selon la revendication 1, dans lequel, si les informations de service comprennent une adresse de localisateur de ressources uniformes, URL, le contrôleur (110) est en outre configuré pour afficher l'adresse URL et pour accéder à l'adresse URL si l'adresse URL est sélectionnée.

8. Procédé d'affichage d'informations de service dans un dispositif électronique (100), le procédé comprenant :
l'identification d'une entrée destinée à activer le Wi-Fi ;
en réponse à l'entrée destinée à activer le Wi-Fi, la recherche de points d'accès, AP, à proximité ;
si un AP (200) prenant en charge Hotspot 2.0 est recherché, la demande d'un message d'informations pour l'AP (200) à partir d'un serveur d'informations (300) connecté à l'AP (200) ;
la réception du message d'informations du serveur d'informations (300) ;
l'affichage des informations de service, si les informations de service liées à l'AP (200) sont incluses dans le message d'informations ; et
la connexion du dispositif électronique (100) à l'AP (200) en utilisant des informations d'accès et des informations d'authentification incluses dans le message d'informations.

9. Procédé selon la revendication 8, comprenant en outre :
avant de connecter le dispositif électronique (100) à l'AP (200) parmi les AP à proximité, l'identification si les informations de service sont incluses dans le message d'informations pour l'AP (200).

10. Procédé selon la revendication 8 ou la revendication 9, comprenant en outre :
avant de connecter le dispositif électronique (100) à l'AP (200) parmi l'au moins un AP recherché, l'identification si des informations de service sont incluses dans un message d'informations respectif pour chacun des AP à proximité ; et
l'affichage d'informations indiquant si les informations de service sont incluses dans le message d'informations respectif pour chacun des AP à proximité.

11. Procédé selon l'une quelconque des revendications 8 à 10, dans lequel les informations de service liées à l'AP (200) sont fournies par un fournisseur de services de l'AP (200) et le fournisseur de services est un opérateur fournissant le réseau de communication Wi-Fi basé sur l'AP.

12. Procédé selon l'une quelconque des revendications 8 à 11, dans lequel la connexion comprend la connexion du dispositif électronique (100) à l'AP (200) via une unité de communication Wi-Fi (170).

13. Procédé selon l'une quelconque des revendications 8 à 12, comprenant en outre :
l'extraction des informations de service du message d'informations et l'affichage des informations de service extraites, si une option destinée à afficher des informations sur l'AP (200) est sélectionnée après la connexion du dispositif électronique (100) à l'AP (200) via l'unité de communication Wi-Fi (170).

14. Procédé selon l'une quelconque des revendications 8 à 13, dans lequel l'affichage comprend :
si les informations de service comprennent une adresse de localisateur de ressources uniformes, URL, l'affichage de l'adresse URL ; et
l'accès à l'adresse URL si l'adresse URL est sélectionnée.
